# EUROPÄISCHE PATENTSCHRIFT

(11) **EP 1 580 869 B1**
(45) Veröffentlichungstag und Bekanntmachung des Hinweises auf die Patenterteilung: **11.12.2013**
(21) Anmeldenummer: 05100670.8
(22) Anmeldetag: 01.02.2005
(51) Int. Cl.: H02K 23/66

(54) **Drehgeber und dessen Fixierung an einer elektrischen Maschine**
Resolver and its fixing on an electric machine
Coder de rotation et son fixation à une machine éléctrique

(30) Priorität: 26.03.2004 DE 102004015041
(43) Veröffentlichungstag der Anmeldung: 28.09.2005
(73) Patentinhaber: ROBERT BOSCH GMBH, 70442 Stuttgart (DE)
(72) Erfinder: Schiller, Herbert, 77830 Buehlertal (DE); Scheer, Dieter, 77830 Buehlertal (DE); Bohnert, Michael, 77855 Achern (DE)

(56) Entgegenhaltungen:
- WO-A-95/04398
- DE-A1- 10 205 413
- DE-C1- 19 945 657
- FR-A- 2 774 227

## Beschreibung

### Stand der Technik

Die Erfindung betrifft eine elektrische Maschine, insbesondere zum Verstellen beweglicher Teile im Kraftfahrzeug, nach der Gattung des unabhängigen Anspruchs 1.

Mit der DE 198 46 501 A1 ist ein elektrischer Motor bekannt geworden, bei dem zur Umdrehungs- und/oder Drehzahlabtastung ein ringförmiger Magnetkörper drehfest auf einer Rotorwelle angeordnet ist. Der ringförmige Magnet ist dabei auf einem ersten Ringabschnitt eines Trägerrings mit einem größeren Innendurchmesser befestigt, als der Innendurchmesser eines zweiten Ringabschnitts des Trägerrings, an dem dieser mittels eines Press-Sitzes auf der Rotorwelle befestigt ist. In einer weiteren Ausführung weist der erste Ringabschnitt des Trägerrings axiale Schlitze auf, um die mechanischen Spannungen zwischen dem Bereich des Press-Sitzes und dem hochempfindlichen Ringmagneten auszugleichen.

Ein solcher Trägerring mit unterschiedlichem Innendurchmesser oder mit angeformten Längsschlitzen ist sehr aufwändig in der Fertigung. Außerdem erlaubt diese Befestigungsweise keine direkte Anordnung des Ringmagneten auf der Rotorwelle. Es besteht daher das Bedürfnis, den hochempfindlichen Ringmagneten in einfachster Weise zuverlässig drehfest auf einer starren Welle zu befestigen.

Mit der FR 2774227 A ist ein Elektromotor bekannt geworden, bei der ein Ringmagnet mittels eines separaten Federrings auf der Ankerwelle fixiert wird, der radial innerhalb des Ringmagneten angeordnet ist.

Die WO 95/04398 A zeigt ebenfalls einen elektromotorischen Antrieb, bei der ein Ringmagnet auf einer Welle befestigt ist. Der Ringmagnet weist in seiner Innenfläche einen umlaufenden radialen Steg auf und wird mit einer axial neben dem Ringmagneten angeordneten anliegenden separat ausgebildeten Andruckscheibe auf der Rotorwelle befestigt.

Mit der DE 19945657 C1 ist ein Kommutatormotor bekannt geworden, bei der ein Drehrichtungsgeber axial neben einem Kommutator auf einer Ankerwelle angeordnet ist. Der Drehrichtungsgeber setzt sich aus zwei halbkreisförmigen Schalenelementen zusammen, die mittels eines zusätzlichen separat ausgebildeten Spannelements, das dem Drehrichtungsgeber über seinem Umfang umschließt, auf der Ankerwelle gehalten werden.

### Vorteile der Erfindung

Die erfindungsgemäße elektrische Maschine mit den kennzeichnenden Merkmalen des unabhängigen Anspruchs 1 hat den Vorteil, dass durch das Anordnen von radialen Freiräumen zwischen den einzelnen begrenzten Auflagebereichen zwischen der Innenfläche und der Oberfläche sich der Ringmagnet begrenzt radial verformen kann, um auftretenden Spannungen auszugleichen. Durch die auf bestimmte Umfangsbereiche begrenzte Auflageflächen ist die Verformung zwischen dem Ringmagneten und dem wellenförmigen Bauteil bei der Montage reduziert, wodurch auch die Montagekräfte und damit die mechanische Belastung für den Ringmagnet reduziert wird. Des weiteren ermöglichen die radialen Freiräume auch ein Ausweichen des Ringmaterials bei unterschiedlichen thermischen Ausdehnungskoeffizienten zwischen dem starren, wellenförmigen Bauteil und dem Ringmagneten.

Die Auflagebereiche zwischen der Oberfläche und der Innenfläche erstrecken sich zumindest teilweise über die Länge des Ringmagneten, dadurch wird der Ringmagnet zuverlässig auf das wellenförmige Bauteil gepresst und ein Verkippen des selben verhindert, ohne dass die radialen Ausgleichsmöglichkeiten über den Umfang im Bereich der Freiräume eingeschränkt werden. Dadurch kann mittels relativ geringer Montagekräfte der Ringmagnet in einem zuverlässigen Pass-Sitz auf der starren Welle fixiert werden. Der Ringmagnet weist an dessen Innenfläche im Bereich der Auflageflächen nach innen gerichtete radiale Anformungen auf. Diese können beispielsweise als ebene Flächen, als spitzige Längskanten oder als beliebig geformte, nach innen gewölbte Flächen ausgebildet sein. Dadurch wird auf einfache Weise im Bereich zwischen diesen Auflagebereichen ein radialer Freiraum zur Materialausdehnung zur Verfügung gestellt

Durch die in den Unteransprüchen aufgeführten Maßnahmen ergeben sich vorteilhafte Weiterbildungen und Verbesserungen der im Anspruch 1 angegebenen Merkmale.

Sind die radialen Auflagebereiche, näherungsweise linienförmig in Axialrichtung ausgebildet, können die Durchmesserverhältnisse zwischen Welle und Ring an den Auflagebereichen sehr genau gefertigt werden, da der Ring bezüglich einer orthogonalen Ebene zur Längsachse praktisch punktförmig gelagert ist.

Um eine solche Lagerung eindeutig zu bestimmen ist es besonders vorteilhaft, über den Umfang genau drei Auflagebereiche anzuordnen, da hier insbesondere bei einer linienförmigen Ausbildung der Auflagebereiche in Axialrichtung eine eindeutige 3-Punkte-Lagerung geschaffen wird (senkrecht zur Wellenachse). In weiteren Variationen können aber auch 4, 5, 6 oder mehr Auflagebereiche angeordnet werden, die die Zuverlässigkeit des Press-Sitzes erhöhen, jedoch höhere Anforderungen an die Fertigungsgenauigkeit stellen.

Eine solche Ringmagnetbefestigung eignet sich besonders für kunststoffgebundene, gespritzte Magneten, die relativ bruchempfindlich sind. Da ein aus Metall gefertigtes wellenförmiges Bauteil sehr starr und wenig nachgiebig ausgebildet ist, ist hier die Anformung von radialen Freiräumen besonders günstig, um eine geringfügige elastische Verformung des Ringmagneten, insbesondere bei dessen Montage, zu ermöglichen.

Dabei können die radialen und tangentialen Abmessungen der Freiräume, sowie deren Anzahl an die Materialkombination zwischen Welle und Ring, sowie an die Wandstärke des Rings angepasst werden, um eine zerstörungsfreie, zuverlässige Montage des Ringmagneten zu ermöglichen.

In einer bevorzugten Ausgestaltung ist die Oberfläche des wellenförmigen Bauteils im Querschnitt rund, ohne jegliche Anformungen oder Aussparungen ausgebildet.

In einer alternativen Ausführung weist die Oberfläche des wellenförmigen Bauteils hingegen zur Ausbildung von Freiräumen radiale Aussparungen auf, wodurch der Außendurchmesser der Welle im Berreich der Aussparungen reduziert wird. Besonders einfach lassen sich diese Aussparungen mittels Materialabtragung an der Oberfläche herstellen, wodurch beispielsweise abgeflachte oder nach innen gewölbte Bereiche der Oberfläche entstehen. Mittels Dreh-Verfahren kann der äußere Umfang des wellenförmigen Bauteils auch vorteilhaft als Polygon-Kurve mit abwechselnden Auflagebereichen und Freiräumen geformt werden.

Wenn das wellenförmige Bauteil direkt durch die Rotorwelle gebildet wird, kann der Ringmagnet ohne Verwendung eines zusätzlichen Trägerrings direkt auf dem Anker montiert werden, wodurch die Anzahl der Bauteile reduziert wird. In einer alternativen Ausführung ist das wellenförmige Bauteil als starre, einfach zu fertigende und befestigende Aufnahmehilfe ausgebildet, die zusätzlich zur Lagerung des Ringmagneten zur Aufnahme oder Anlage an weiteren Bauelementen dient.

Zur besseren Fixierung des Ringmagneten auf dem wellenförmigen Bauteil weist dieses ringförmige Kerben und Kanten auf, an denen sich der Ringmagnet analog zu einem Wasserschlauch auf einer Schlauchkupplung, festkrallt. Diese ringförmigen Kerben und Kanten werden von den in Längsrichtung angeordneten Auflagebereichen und Freiräumen überlagert.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen
- Figur 1: einen Schnitt durch eine elektrische Maschine,
- Figur 2 und 3: eine perspektivische Darstellung und eine Ansicht eines erfindungsgemäßen Ringmagneten,
- Figur 4 und 5: eine perspektivische Darstellung und ein vergrößerter Schnitt eines wellenförmigen Bauteils zur Aufnahme des Ringmagneten aus Figur 2 und 3 und
- Figur 6 bis 8: verschiedene Darstellungen eines weiteren Ausführungsbeispiels eines erfindungsgemäßen wellenförmigen Bauteils.

### Beschreibung der Ausführungsbeispiele

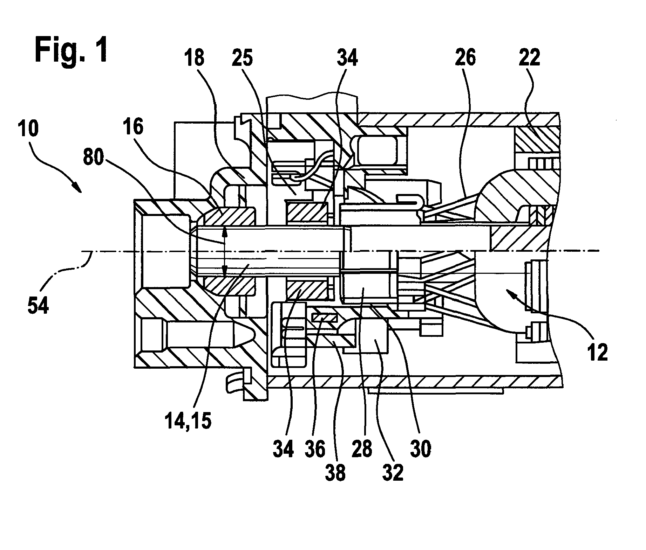

In Figur 1 ist ein Längsschnitt einer elektrischen Maschine 10 dargestellt, der beispielsweise als Antriebsmotor 10 für Fensterheber, Schiebedach, Sitzverstellung oder anderer beweglicher Teile im Kraftfahrzeug eingesetzt wird. Die elektrische Maschine 10 weist einen in zwei Drehrichtungen antreibbaren Rotor 12 auf, dessen Rotorwelle 14 mittels Gleit- oder Kugellager 16 gelagert ist. Die Lager sind in einem Lagerschild 18 aufgenommen, die eine Stirnseite des Motorgehäuses 20 abschließen. An der Innenseite des Motorgehäuses 20 sind Permanentmagnete 22 angeordnet, die mit dem Rotor 12 zusammenwirken. Auf der Rotorwelle 14 ist hierzu ein Ankerpaket 24 drehfest befestigt, auf dem eine Ankerwicklung 26 angeordnet und mit einem ebenfalls auf der Rotorwelle 14 befestigten Kommutator 28 verbunden ist. Auf dem Kommutator 28 sind Kohlebürsten 30 radial aufgesetzt, die in einem Bürstenschacht 32 radial verschieblich gelagert sind und auf die Oberfläche des Kommutators 28 gepresst werden. Die Rotorwelle 14 trägt zwischen dem Lager 16 und dem Kommutator 28 einen Ringmagneten 34, der zur Umdrehungs- bzw. Drehzahlerfassung mit mindestens einem Hallsensor 36 zusammenwirkt, der beispielsweise an einem Bürstenhalter 38 oder einer nicht näher dargestellten Leiterplatte befestigt ist. Der Ringmagnet 34 ist hierbei als kunststoffgebundenes Spritzgussteil ausgebildet, das direkt auf der die ein wellenförmiges Bauteil 15 bildende Rotorwelle 14 aus Stahl aufgepresst ist. Das wellenförmige Bauteil 15 weist an seinem näherungsweise runden Umfang 40 eine radiale äußere Oberfläche 42 auf, an der der Ringmagnet 34 mit seiner Innenfläche 44 anliegt.

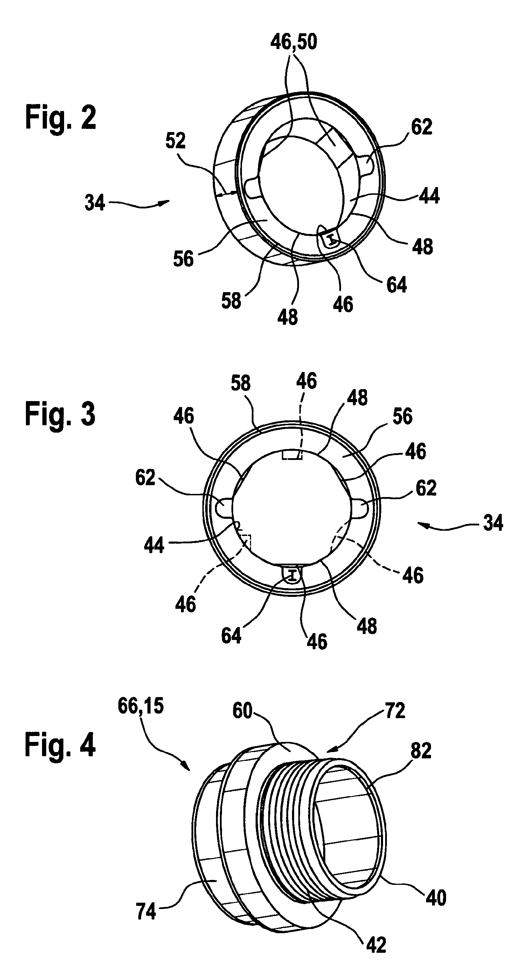

Damit sich der Ringmagnet 34 in gewissen Grenzen radial verformen kann, weist der Ringmagnet 34 an der Innenfläche 44 angeformte Auflagebereiche 46 auf, wie dies in Figur 2 und 3 dargestellt ist. Zwischen den Auflagebereichen 46, die in montiertem Zustand gegen die Oberfläche 42 des wellenförmigen Bauteils 15 gepresst werden, sind über den Umfang 40 radiale Freiräume 48 angeordnet, in denen keine Pressung zwischen der Innenfläche 44 und der Oberfläche 42 besteht. In Figur 2 sind beispielsweise drei gerade Flächen 50 als Auflagebereiche 46 durch Spritzgießen einstückig angeformt, wobei sich die Auflagebereiche 46 über die gesamte axiale Länge 52 des Ringmagneten erstrecken. Liegen die Auflagebereiche 46 in montiertem Zustand an der runden Oberfläche 42 an, bilden diese je nach Anpresskraft mehr oder weniger linienförmig ausgebildete Anlageflächen. Diese linienförmigen Anlageflächen sind dann näherungsweise parallel zur Längsachse 54 der Rotorwelle 14, bzw. des Ringmagneten 34 ausgerichtet.

In einer Variation des Ringmagneten 34 sind in Figur 3 insgesamt sechs Auflagebereiche 46 angeformt, die beispielsweise jeweils alle auch gewölbt oder mit einer spitzen Kante ausgebildet sind (gestrichelt gezeichnet). Der Ringmagnet 34 weist an seiner Stirnseite 56 als Anschlag 58 eine axiale Wulst 58 auf, die in montiertem Zustand an einer axialen Schulter 60 des Rotors 12 anliegt. Zur Herstellung mittels Spritzgussverfahren weist der Ringmagnet 34 Anguss-Stellen 62 auf, die axial in die Stirnseite 56 eingelassen sind. Optional weist der Ringmagnet 34 zusätzlich eine Markierung 64 auf, die die unterschiedliche Magnetisierungen, beispielsweise 2-, 4-, 8- oder mehr-polig, kennzeichnet.

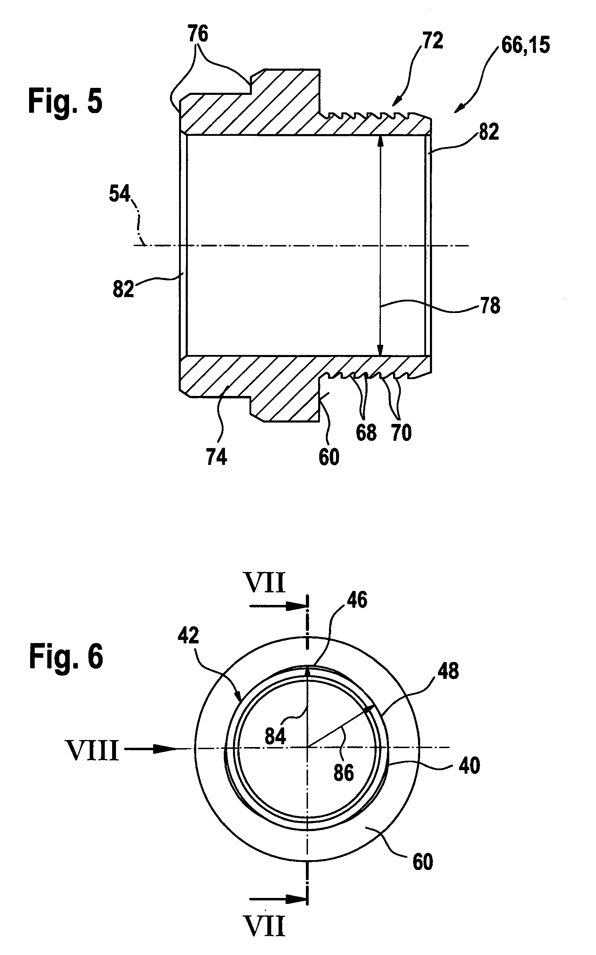

Figur 4 und 5 zeigen als wellenförmiges Bauteil 15 eine Aufnahmehülse 66, die als starres Bauteil aus Metall gefertigt ist. Der Magnetring 34 aus Figur 2 oder 3 kann hierbei anstelle direkt auf die Rotorwelle 14, auf die Aufnahmehülse 66 montiert werden, die dann wiederum drehfest auf die Rotorwelle 14 montiert wird. Das wellenförmige Bauteil 15 weist, wie die Rotorwelle 14, eine runde Oberfläche 42 auf, an der die Innenfläche 44 mit den Auflagebereichen 46 anliegt. Bei der Montage wird der Ringmagnet 34 axial über die Oberfläche 42 geschoben, bis der Magnetring 34 beispielsweise mit seinem Anschlag 58 an der axialen Schulter 60 anliegt. Um ein axiales Abrutschen des Ringmagneten 34 auf der Oberfläche 42 zu verhindern, weist diese ringförmige Kerben 68 und Kanten 70 auf, die entsprechend einer Schlauchkupplung im Längsschnitt als Sägezahnprofil 72 ausgeformt sind. Dabei verkrallen sich die Kanten 70 in der Innenfläche 44, insbesondere an den Auflagebereichen 46, wo der Magnetring 34 mittels eines Press-Sitzes mit der Oberfläche des wellenförmigen Bauteils 15 verbunden ist. Die Aufnahmehülse 66 weist einen weiteren axialen Bereich 74 auf, der beispielsweise zur Aufnahme weiterer Bauelemente dient, die auf der Rotorwelle 14 angeordnet werden sollen. Beispielsweise dient der zweite axiale Bereich 74 als axialer Anlagefläche 76, mit dem sich die Rotorwelle 14 an dem im Gehäuse angeordneten Lager 16 abstützt. Die Aufnahmehülse 66 weist einen Innendurchmesser 78 auf, der zusammen mit dem Außendurchmesser 80 der Rotorwelle 14 als Presspassung ausgebildet ist. Zur besseren Montage der Aufnahmehilfe 66 weist diese an ihren axialen Enden Fasen 82 auf.

In einer alternativen Ausführung der Erfindung ist die Innenfläche 44 des Ringmagneten 34 rund ausgebildet, ohne angeformte radiale Auflagebereiche 46 oder der Aussparung radialer Freiräume 48. Ein solcher Ringmagnet 34 mit runder Innenfläche 44 wird hierbei auf die Oberfläche 42 des wellenförmigen Bauteils 15 montiert, an dessen äußerem Umfang 40 radiale Auflagebereiche 46 abwechselnd mit radialen Freiräumen 48 ausgebildet sind. Die Aufnahmebereiche 46 und Freiräume 48 in Figur 6 sind beispielsweise mittels Dreh-Verfahren als Dreier-Polygon angeformt, so dass sich die Auflagebereiche 46 mit größerem Radius 84 mit den Bereichen der Freiräume 48 mit geringerem Radius 86 abwechseln. In Figur 6 sind an der Oberfläche 42 regelmäßig verteilt drei Auflagebereiche 46 im Uhrzeigersinn an der 12-Uhr-Stellung, der 4-Uhr-Stellung und der 8-Uhr-Stellung angeformt. Entsprechend dazwischen sind die Freiräume 48 an der 2-Uhr, 6-Uhr und 10-Uhr-Stellung angeordnet.

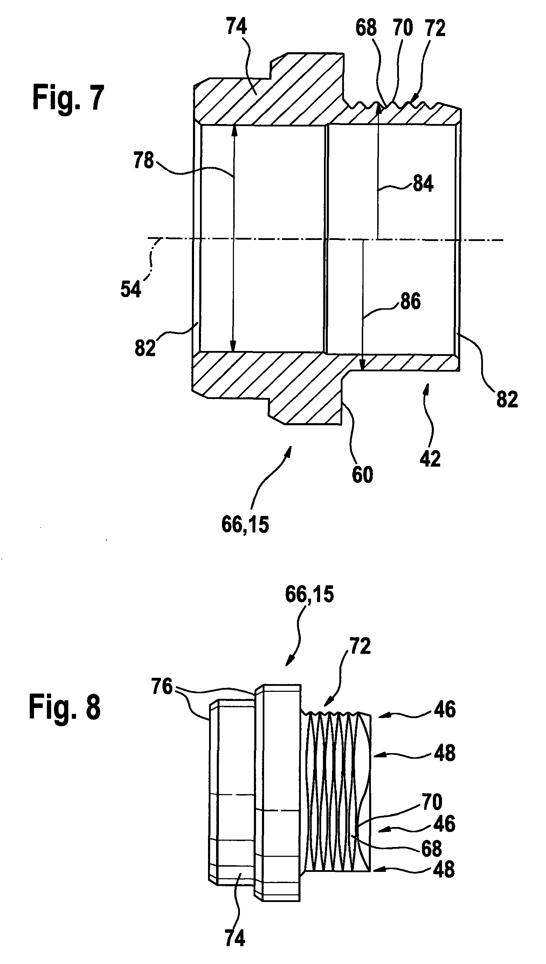

Figur 7 zeigt einen Längsschnitt des wellenförmigen Bauteils 15 gemäß VII-VII in Figur 6. Im Vergleich zu der runden Oberfläche 42 in Figur 5 sind in Figur 7 an den Bereichen der Freiräume 48 die Kanten 70 abgetragen, beispielsweise mittels abdrehen oder fräsen (in Figur 7 unten dargestellt). In den Auflagebereichen 46 sind wiederum Kerben 68 und Kanten 70 angeformt, die in Längsrichtung 54 das Sägezahnprofil 72 bilden.

In Figur 8 ist die Oberfläche 42 des wellenförmigen Bauteils 15 in der Seitenansicht (in Figur 6 von links) dargestellt, wobei die Kanten 70 in den Auflagebereichen 46 recht spitz ausgebildet sind (12-Uhr, 8-Uhr-Stellung) und in den Freiräumen 48 (6-Uhr, 10-Uhr) stark abgeflacht sind. Dabei sind den in Axialrichtung 54 linienförmig ausgebildeten Auflageflächen 46 die ringförmigen Kerben 68 überlagert, damit sich der Ringmagnet 34 am Sägezahnprofilzahn 72 festkrallt. Die Aufnahmehülse 66 weist, wie gemäß der Ausführung in Figur 5, einen zweiten axialen Bereich 74 zur Anbindung weiterer Bauelemente auf, wobei hier der Innendurchmesser 78 im Bereich 74 gegenüber dem Bereich mit der Oberfläche 42 abgesetzt ist. Alternativ zum Drehverfahren können die radialen Freiräume 48 auch durch andere Arten der Materialabtragung, beispielsweise mittels Schleifen oder Fräsen, ausgeformt werden. An Stelle der Aufnahmehülse 66, können die Freiräume 48 bzw. die Auflagebereiche 46 auch direkt auf der Rotorwelle 14 angeformt werden, um den Magnetring 34 mit runder Innenfläche 44 direkt auf die Rotorwelle 14 zu pressen.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung der Auflagebereiche 46 und der Freiräume 48 an der Innenfläche 44 oder an der Oberfläche 42 variiert werden. Ebenso kann die Ausbildung des wellenförmigen Bauteils 15 als Aufnahmehülse 66 oder als Rotorwelle 14 der speziellen Anwendung der elektrischen Maschine 10 angepasst werden. Bevorzugt wird die Erfindung für Kommutatormotoren 10 für Sitzverstellvorrichtungen im Kraftfahrzeug eingesetzt, sie kann aber auch für beliebige andere Elektromotoren 10 verwendet werden.

## Patentansprüche

1. Elektrische Maschine (10), insbesondere zum Verstellen beweglicher Teile im Kraftfahrzeug, mit einem drehfest auf einem Rotor (12) angeordneten Ringmagneten (34), der eine Innenfläche (44) aufweist, die mit einer äußeren radialen Oberfläche (42) eines wellenförmigen Bauteils (15), das als Rotorwelle (14) oder als eine drehfest auf der Rotorwelle angeordnete Aufnahmehülse ausgebildet ist, (66) kraftschlüssig verbunden ist, und die äußere Oberfläche (42) der Rotorwelle (14) oder der Aufnahmehülse (66) rund ist, wobei zwischen der Innenfläche (44) und der äußeren radialen Oberfläche (42) abwechselnd über deren Umfang (40) radiale Auflagebereiche (46) und radiale Freiräume (48) angeordnet sind, und sich die radialen Auflagebereiche (46) näherungsweise über die gesamte axiale Länge (52) des Ringmagneten (34) erstrecken,
**dadurch gekennzeichnet, dass** der Ringmagnet (34) an dessen Innenfläche (44) im Bereich der Auflageflächen (46) nach innen gerichtete radiale Anformungen aufweist, die beispielsweise als ebene Flächen, als spitzige Längskanten oder als beliebig geformte, nach innen gewölbte Flächen ausgebildet sein, wodurch im Bereich zwischen den Auflagebereichen (46) der radiale Freiraum (48) zur Materialausdehnung zur Verfügung gestellt wird.

2. Elektrische Maschine (10) nach Anspruch 1, **dadurch gekennzeichnet, dass** die radialen Auflagebereiche (46) im wesentlichen linienförmig, in etwa parallel zur Längsachse (54) des wellenförmigen Bauteils (15) ausgebildet sind.

3. Elektrische Maschine (10) nach einem der Ansprüche 1 oder 2, **dadurch gekennzeichnet, dass** zwischen der Innenfläche (44) und der äußeren Oberfläche (42) drei, vier, fünf oder sechs - insbesondere genau drei - radiale Auflagebereiche (46) angeordnet sind.

4. Elektrische Maschine (10) nach einem der vorhergehenden Ansprüche,
**dadurch gekennzeichnet, dass** das wellenförmige Bauteil (15) aus Metall und
der Ringmagnet (34) mittels Spritzgußverfahren als kunststoffgebundener Magnet (34) gefertigt ist.

5. Elektrische Maschine (10) nach einem der vorhergehenden Ansprüche, **dadurch gekennzeichnet, dass** der Ringmagnet (34) bei der Montage auf das wellenförmige Bauteil (15) derart radial verformbar ist, dass sich das Material des Ringmagneten (34) von den Auflageflächen (46) in die Bereiche der Freiräume (48) ausdehnt.

6. Elektrische Maschine (10) nach einem der vorhergehenden Ansprüche, **dadurch gekennzeichnet, dass** die Aufnahmehülse (66) zur Anbindung weiterer auf der Rotorwelle (14) angeordneter Bauelemente (16) dient.

7. Elektrische Maschine (10) nach einem der vorhergehenden Ansprüche, **dadurch gekennzeichnet, dass** die äußere Oberfläche (42) des wellenförmigen Bauteils (15) im Längsschnitt ein näherungsweise sägezahnförmiges Profil (72) über den axialen Bereich des Ringmagneten (34) - insbesondere mittels ringförmig ausgeformter Kerben (68) - aufweist.

## Claims

1. Electrical machine (10), in particular for adjusting moving parts in a motor vehicle, having a ring magnet (34) which is arranged on a rotor (12) such that it rotates with it and which has an inner face (44) which is connected in a force-fitting manner to an outer radial surface (42) of a shaft-like component (15) which is in the form of a rotor shaft (14) or in the form of a receiving bushing (66) which is arranged on the rotor shaft such that it rotates with it, and the outer surface (42) of the rotor shaft (14) or of the receiving bushing (66) is round, wherein radial bearing regions (46) and radial clearances (48) are arranged between the inner face (44) and the outer radial surface (42) in an alternating manner over the circumference (40) of the said outer radial surface, and the radial bearing regions (46) extend approximately over the entire axial length (52) of the ring magnet (34), **characterized in that** the ring magnet (34) has inwardly directed radial formations on its inner face (44) in the region of the bearing faces (46), the said formations being in the form of, for example, flat faces, in the form of pointed longitudinal edges or in the form of inwardly curved faces of any desired shape, as a result of which the radial clearance (48) is available for material expansion in the region between the bearing regions (46).

2. Electrical machine (10) according to Claim 1, **characterized in that** the radial bearing regions (46) are substantially linear and approximately parallel to the longitudinal axis (54) of the shaft-like component (15).

3. Electrical machine (10) according to either of Claims 1 and 2, **characterized in that** three, four, five or six - in particular precisely three - radial bearing regions (46) are arranged between the inner face (44) and the outer surface (42).

4. Electrical machine (10) according to one of the preceding claims, **characterized in that** the shaft-like component (15) is produced from metal, and the ring magnet (34) is produced as a plastic-bound magnet (34) by means of injection-moulding methods.

5. Electrical machine (10) according to one of the preceding claims, **characterized in that** the ring magnet (34), when it is mounted onto the shaft-like component (15), can be radially deformed in such a way that the material of the ring magnet (34) expands from the bearing faces (46) into the regions of the clearances (48).

6. Electrical machine (10) according to one of the preceding claims, **characterized in that** the receiving bushing (66) serves to connect further structural elements (16) which are arranged on the rotor shaft (14).

7. Electrical machine (10) according to one of the preceding claims, **characterized in that** the outer surface (42) of the shaft-like component (15) has an approximately sawtooth-like profile (72) over the axial region of the ring magnet (34) - in particular by means of grooves (68) which are formed in a ring-like manner - in a longitudinal section.

## Revendications

1. Machine électrique (10) en particulier pour le réglage de pièces mobiles dans un véhicule automobile, comprenant un aimant annulaire (34) disposé de manière solidaire en rotation sur un rotor (12), lequel aimant annulaire présente une surface interne (44) qui est connectée par engagement par force à une surface extérieure radiale (42) d'un composant (15) en forme d'arbre, qui est réalisé sous forme d'arbre de rotor (14) ou sous forme de douille de réception (66) disposée de manière solidaire en rotation sur l'arbre de rotor, et la surface extérieure (42) de l'arbre de rotor (14) ou de la douille de réception (66) étant ronde, des régions d'appui radiales (46) et des espaces libres radiaux (48) étant disposés en alternance entre la surface interne (44) et la surface extérieure radiale (42) sur leur périphérie (40) et les régions d'appui radiales (46) s'étendant approximativement sur toute la longueur axiale (52) de l'aimant annulaire (34),
**caractérisée en ce que** l'aimant annulaire (34) présente, au niveau de sa surface interne (44) dans la région des surfaces d'appui (46), des formations radiales orientées vers l'intérieur qui peuvent être réalisées par exemple sous forme de surfaces planes, sous forme d'arêtes longitudinales pointues ou sous forme de surfaces de forme quelconque cintrées vers l'intérieur, de sorte que dans la région entre les régions d'appui (46), l'espace libre radial (48) soit disponible en vue de permettre la dilatation du matériau.

2. Machine électrique (10) selon la revendication 1, **caractérisée en ce que** les régions d'appui radiales (46) sont réalisées essentiellement sous forme linéaire, approximativement parallèlement à l'axe longitudinal (54) du composant en forme d'arbre (15).

3. Machine électrique (10) selon l'une quelconque des revendications 1 ou 2, **caractérisée en ce qu'**entre la surface interne (44) et la surface extérieure (42) sont disposées trois, quatre, cinq ou six - en particulier exactement trois - régions d'appui radiales (46).

4. Machine électrique (10) selon l'une quelconque des revendications précédentes, **caractérisée en ce que** le composant en forme d'arbre (15) est fabriqué en métal et l'aimant annulaire (34) est fabriqué par un procédé de moulage par injection sous forme d'aimant noyé dans du plastique (34).

5. Machine électrique (10) selon l'une quelconque des revendications précédentes, **caractérisée en ce que** l'aimant annulaire (34), lors du montage sur le composant en forme d'arbre (15), peut être déformé radialement de telle sorte que le matériau de l'aimant annulaire (34) se dilate dans les régions des espaces libres (48) depuis les surfaces d'appui (46).

6. Machine électrique (10) selon l'une quelconque des revendications précédentes, **caractérisée en ce que** la douille de réception (66) sert à relier d'autres composants (16) disposés sur l'arbre de rotor (14).

7. Machine électrique (10) selon l'une quelconque des revendications précédentes, **caractérisée en ce que** la surface extérieure (42) du composant en forme d'arbre (15) présente, en coupe longitudinale, un profil approximativement en forme de dents de scie (72) sur la région axiale de l'aimant annulaire (34) - en particulier au moyen d'encoches (68) de forme annulaire.
